# EUROPEAN PATENT APPLICATION

(11) **EP 3 587 019 A1**
(43) Date of publication of application: **01.01.2020**
(21) Application number: 18756584.1
(22) Date of filing: 19.02.2018
(51) Int. Cl.: B23K 7/00, B23K 7/08, B23K 35/00, B23K 35/02

(54) **THERMAL LANCE COMPRISING AT LEAST ONE HOLLOW TUBULAR PROFILE MADE OF ALUMINIUM AND/OR MAGNESIUM, AMONG OTHER MATERIALS, WHICH ALLOWS SAME TO BE USED IN PROCESSES REQUIRING A LARGE AMOUNT OF ENERGY TO CUT, PERFORATE AND/OR MELT MATERIALS HAVING A HIGH THERMAL REQUIREMENT**

(30) Priority: 21.02.2017 CL 2017419
(71) Applicant: Trefimet S.A., San Bernardo, Santiago 8320000 (CL)
(72) Inventor: PEÑA ASTORGA, Víctor, San Bernardo, Santiago (CL)
(74) Representative: Pons Ariño, Angel
(86) International application number: PCT/CL2018/050012
(87) International publication number: WO 2018/152651

(57) **Abstract**

The invention relates to a thermal lance (1) consumable by an exothermic reaction used to perforate and/or cut any type of material of different thicknesses and dimensions, the lance comprising a main outer tubular body (2) and at least one hollow inner profile (3) and/or at least one hollow inner profile (4) that is made of aluminium and/or magnesium and/or another material and has a different cross section, the profiles being located concentrically with respect to each other and/or with respect to the main outer tubular body (2), cavities (5) being formed between each hollow inner profile and/or the main outer tubular body, the cavities forming passages (6) for oxidizing gas that flows through the length of the thermal lance (1), wherein the cavities must have at least one straight part and at least one curved part to allow the flow of oxidizing gas to pass through the lance with a suitable turbulence during the operation thereof.

## Description

### FIELD OF THE INVENTION

The invention refers to a thermal lance, consumable through exothermal reaction that is used to perforate and/or cut any type of material of different thicknesses and dimensions. Preferably the invention refers to a thermal lance that comprises al least one hollow tubular profile made of aluminium, and/or magnesium, amongst other materials, which allows the same to be used in processes that require a large amount of energy to cut, perforate and/or melt materials having a high thermal requirement, as well as, for a process that requires a very low concentration of iron.

### BACKGROUND OF THE INVENTION

Thermal lances currently used in the industry, for perforating and generating opening in smelters, are basically configured, by a series of tubular profiles of different shapes and sizes, in cross section, inserted in an exterior tubular body, or otherwise comprise a series of wires inserted within said exterior tubular body.

Between each of the interior elements, that comprise said exterior tubular body, a series of openings is formed between each other, through which oxidant gases flow, such as pressurized oxygen that is injected through one end of the lance so that it can flow to the opposite end, which will come in contact with the oven, allowing the heat to produce the combustion between the iron contained in the steel and the injected oxygen, producing an exothermal reaction at its ignition end.

For an exothermal reaction to occur in the totality of the iron mass, that comprises a thermal lance, to achieve the combustion of the iron that is produced in solid state, to generate important flows of thermal energy, there must be an optimal relation between the amount of iron in contact with the oxygen, as well as the contact dynamics between the oxygen with the reacting surface of the iron.

Should the optimal combustion condition not be achieve, the iron will melt with part of the energy that is provided by the rest of iron that did react to the combustion, which means a reduction of the available energy to carry out perforation, cut and/or melting activities of any material, producing a more inefficient process.

With a complete combustion of the iron the heat of the combustion that could generate thermal energy of approximately 7.25 kJ/g of an iron lance, however the aforementioned due to the structural configuration of the lances normally used in the industry, allows the generation of 4.2 kJ/g of thermal energy.

For some melting processes of non-iron materials, such as silica carbide, titanium carbide, and/or carbon, amongst others, require a thermal lance that allows the generation of a high flux of thermal energy, due to said materials being of high thermal requirement, however the thermal lances produced solely from iron do not achieve the necessary energy, and also require a high flow of oxygen for combustion. In addition to the aforementioned, said cutting and/or perforation process of said materials requires a low iron contamination, which is not achieved with thermal lances produced entirely from iron.

An alternative to achieve a high flow of thermal energy is the usage of aluminium, which has the characteristic of generating a high amount of energy (29.85 kJ/g), which would lead to those skilled in the art to add aluminium to the configuration of a thermal lance.

Aluminium has a melting point much lower to its ignition point, which means ignition is in a liquid state, which generates that the position of combustion, direction and/or orientation that the generated energy flow takes are not controllable.

It's important to understand that if the iron does not react 100%, the energy that is left to melt and take to ignition point the aluminium in the end of the lance will not be enough, because a lot will be used in melting the non-reacted iron.

Therefore there is the need to provide a thermal lance that comprises the usage of aluminium and/or magnesium, and/or other materials, that in configuration can allow the aluminium and/or other materials to combust in the required place, allowing to maintain the position of the combustion under control, as well as the direction and/or orientation that the flow of energy adopts, to provide a thermal lance that generates a high value of thermal energy in the most efficient form, namely, that produce a great flow of energy with low mass, allows to achieve a low iron and/or iron oxide contamination, which allows to perforate and/or cut materials with high thermal resistance, reduced volume, lighter and that consumes les oxygen amount that thermal lances currently used.

### SUMMARY OF THE INVENTION

The object of the invention is providing a thermal lance consumable by exothermal reaction that is used to perforate and/or cut by melting any type of material of different thickness and dimension, of high energy generation, low weight and/or low oxygen consumption.

Another objective of the invention, is provide a thermal lance that comprises the usage of aluminium and/or magnesium, amongst other materials, that in configuration allows the generation of a great flow of energy with low mass, low iron and/or iron oxide contamination, to be used in cutting and/or perforation procedures by melting non-ferric materials, such as silica carbide, titanium carbide, carbon, amongst others.

The invention corresponds to a thermal lance (1) consumable by exothermal reaction that is used to perforate and/or cut any type of material of different thickness and dimensions, that comprises a main exterior tubular body (2) and at least an interior hollow profile (3) that has a different cross section, and/or at least an aluminium, and/or magnesium, and/or another material interior hollow profile (4), having a different cross section, located in concentric form between them and/or respect to the main exterior tubular body (2), therefore forming between each of the interior hollow profiles and/or the main exterior tubular body cavities (5) that configure passages for oxidizing gas (6), such as for example oxygen, that will flow throw the length of the thermal lance (1), and where they must have at least a straight part and at least a curve part, in order to achieve that the oxidizing gas flow passes with the adequate turbulence through the lance during its operation, to generate perpendicular and/or radial force components to the walls of the cavities, and where furthermore said cavities or interior passages must have a configuration such that the disposition of the at least one interior hollow profile (3) and the at least one aluminium, and/or magnesium, and/or other material interior hollow profile (4), generate 100% steel or iron wall cavities adjacent to wall cavities of steel or iron and aluminium and/or magnesium, and/or other material, and adjacent to 100% aluminium and/or magnesium, and/or another material, wall cavities.

The relation between the cross areas of the cavities or passages, through which the oxygen flows, and the cross area of the combustible material (iron, aluminium, and/or magnesium, and/or other materials), in a metal area/oxygen area relation, and/or the relation between the thickness of the aluminium and/or magnesium parts and the iron or steel, must be within a proportion and range such that they allow to ensure that the aluminium and/or magnesium be melted before the adjacent iron or steel is combusted, accelerating its release, allowing therefore for it to pass through the high energy zone that releases the iron reaction, reacting with the aluminium, at ignition temperature, with the excessive oxygen of the other combustions, producing that the aluminium generates a high amount of thermal energy.

The thermal lance of the present invention, allows to achieve an effective combustion of aluminium, with a high generation of available thermal energy, such as for example in the end of the lance, greater than at least 7.6 kJ/g, with lower iron contamination, that requires less oxygen consumption, lighter and/or producing a lower cost of operation, managing to provide a more efficient thermal lance, that generates at least 2.6 times more unit energy (kJ/g), with respect to lances that comprise iron along with iron.

### DETAILED DESCRIPTION OF THE INVENTION

Diverse non-limiting embodiments of the present invention will be described now to provide a general comprehension of the principles of the structural function, manufacturing and/or use of the apparatus, methods and/or articles described herein. One or more examples of these non-limiting embodiments are illustrated in the attached figures. Those skilled in the art will understand that the products, apparatus and/or specific methods described herein and illustrated in the attached figures are non-limiting illustrative embodiments and that the scope of the diverse non-limiting embodiments of the present invention is defined, solely, by the claims. The features illustrated or described in conjunction with a non-limiting embodiment can be combined with the features of other non-limiting embodiments. Said modifications and variations have the purpose of being included in the scope of the present invention.

### DESCRIPTION OF THE FIGURES

With the purpose of aiding a better comprehension of the features of the invention, according to a preferred example of the practical embodiment of the same, attached as part of the description, a set of figures wherein the invention is represented as illustration and non-limiting.
Figure 1 corresponds to a frontal view of an end, of a preferred embodiment, of a thermal lance of the present invention.
Figure 2 corresponds to a frontal lateral perspective view, with a partial section of one end, of a preferred embodiment, of the thermal lance of the invention.
Figure 3 corresponds to an inferior lateral perspective view, with a partial section of the end, of a preferred embodiment, of the thermal lance of the invention.
Figure 4 corresponds to a frontal view of an end of the preferred embodiment of a thermal lance of the present invention.
Figure 5 corresponds to a lateral view of a longitudinal section of the end, of a preferred embodiment, of the thermal lance of the invention, that shows the form in which it combusts.
Figure 6 corresponds to a lateral view of a longitudinal section of the end, of a preferred embodiment, of the thermal lance of the invention, that shows the way in which the oxidizing gas reacts.

### PREFERRED EMBODIMENT OF THE INVENTION

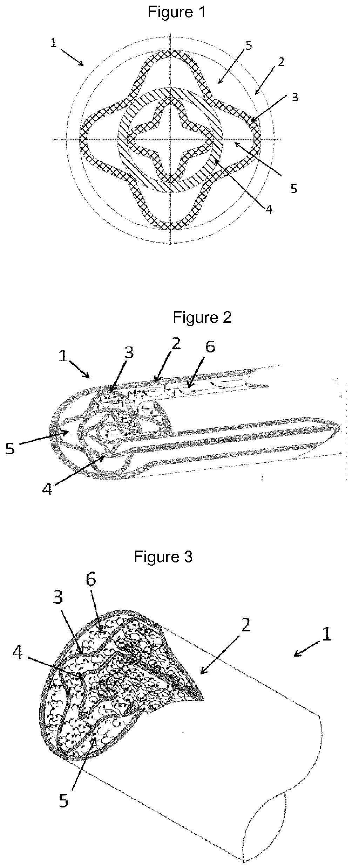

The present invention describes a thermal lance (1) consumable by exothermal reaction that is used to perforate and/or cut any type of material of different thickness and dimensions, that comprises a tubular exterior main body (2) and at least an interior hollow profile (3) that has a different cross section, and/or at least a aluminium, and/or magnesium, and/or another material interior hollow profile (4), having a different cross section (figures 1 and 2) where the walls of the at least one interior hollow profile have a change in directions, where the way the cross section of said interior profiles is selected amongst at least one square, oval, triangular, hexagonal shape, in the shape of star with multiple points, and/or round, as well as any other polygonal shape.

The main exterior tubular body (2) is in charge of containing the at least one interior hollow profile (3) that has a different cross section, and/or at least a aluminium, and/or magnesium, and/or another material, interior hollow profile (4) having a different cross section, such that each of said elements that conform the thermal lance, main exterior body, and/or interior hollow profiles (3,4), are located in concentric form between them and/or respect to the main exterior tubular body (2) (figure 1 and 2), having each of the interior hollow profiles a different cross section, thereby forming between each of the interior hollow profiles and/or the main exterior tubular cavities (5) that configure passages of oxidizing gas (6) (figures 1, 2 and 3), such as for example oxygen, that flows through the length of the thermal lance (1).

All the cavities or interior passages formed within the thermal lance (1) have varied geometric forms. The form of each cavity or passage and/or the number of cavities or passages between the interior hollow profiles, depends on the shape the cross sections of the profiles have.

The cavities or interior passages (5) allow the free circulation of oxidizing gases (6), necessary when the thermal lance is in operation, preferably the oxidizing gases correspond to a flow of oxygen.

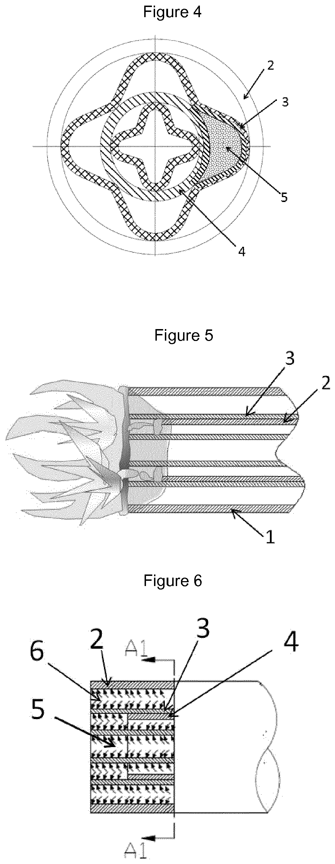

The cavities or interior passages (5) that are formed between the interior hollow profiles (3, 4), preferable must have at least a straight part and at least a curve part (figure 4, in order to achieve that the flow of oxidizing gas that passes with an adequate turbulence through the lance during its operation, generates force components perpendicular and/or radial to the walls of the cavities (figures 2 and 3), achieving therefore a balance in the contact of fuel, such as for example steel and/or iron, with the oxidizing gas, such as for example oxygen, producing due to exposure to heat, the lance always being lit because the conditions of the fire triangle are always maintained, namely, oxygen, fuel and heat, in conjunction (figures 5 and 6).

A thermal lance having a high thermal energy generation, requires that the aluminium and/or magnesium be used, as material for the formation of at least one of the interior hollow profiles of the lance, because said material generates a lot of energy, approximately 29.85 kJ/g, compared to steel or iron, approximately 4.2 kJ/g, that normally is used in the integral manufacturing of thermal lances of the state of the art.

Preferably, the cavities or interior passages (5) of the thermal lance (1) of the invention, must have a configuration such that the disposition of the at least one interior hollow profile (3) and of the at last one aluminium, and/or magnesium, interior hollow profile (4) generates wall cavities 100% of steel or iron adjacent to wall cavities of steel or iron and aluminium and/or magnesium, adjacent to wall cavities 100% of aluminium and/or magnesium (Figure 4).

This configuration allows that the aluminium and/or magnesium, that have a lower melting point than iron, are melted before the iron or steel react in combustion, generating the necessary thermal energy that requires the aluminium and/or magnesium to melt, allowing it to release from its solid zone emigrating outwards from the conduits passing through the high caloric energy zone, that was generated by iron or steel, reaching the aluminium and/or magnesium, or other material of high thermal energy generation immediately to the ignition temperature, reacting in combustion with the oxygen that flows through the conduits, achieving the combustion in the place required (Figure 5).

The width to height proportion of the cavities or passages with the wall thicknesses of the materials, from which are formed the exterior tubular body and/or the interior hollow profiles, with which the oxygen is put in contact must be such that the normal force component with which the oxygen collides with the surface that is at ignition temperature, favours the physical adsorption necessary so that 100% of the iron and steel the walls have is reacted, achieving that with the conduction, convection and/or radiation of the temperature that the iron or steel combustion generates, the aluminium and/or magnesium, or other material having high energy generation that the thermal lance contains, is melted in approximately 3 mm to at least 10 mm beyond the tip of the lance where the iron or steel react.

This condition, is achieved with the configuration of the lance of the present invention, according to what is previously described, because the relation between cross areas of the cavities or passages, through which the oxygen flows, and the cross area of the combustible material (iron, aluminium, and/or magnesium, and/or other materials) is in a metal area/oxygen area ration in a range between approximately 1:2 to at least 1:8, and/or the ratio between the thickness of the aluminium and/or magnesium parts and the iron or steel is in a range of between approximately 1:3 to at least 1:70.

With the ratios and/or proportions, of the lance of the present invention, it is ensured that the aluminium and/or magnesium is melted before the adjacent iron or steel is combusted, bringing forward its release in at least 3 mm, allowing it to pass through the high energy zone that the iron reaction releases, therefore reacting the aluminium, at ignition temperature, with the excess oxygen from the other combustions, producing that the aluminium generate a high amount of thermal energy, approximately 29.85 kJ/g.

The thermal lance of the present invention allows to achieve an effective combustion of aluminium, with high thermal energy available, greater than 7.6 kJ/g, with lower iron contamination, requiring a lower oxygen consumption, cheaper to produce and/or lighter, achieving therefore a more efficient thermal lance.

In an embodiment, the thermal lances of the present invention can be manufactured from steel having low carbon content.

In the thermal lances of the present invention the hollow exterior body conforms the mantle of the lance and said mantle has uniform or irregular exterior structure. The exterior body of the lance can be of the same cross section throughout the whole body and/or can present more than one cross section. Similarly, the interior profiles can have the same cross section throughout all of its body and/or can present more than one cross section.

The thermal lances of the present invention can be attachable or non-attachable, depending on the shape that its exterior ends present. An attachable lance is the one that can be joined to another lance, directly without the intervention of an external medium and/or by means of an additional means such as for example a piece or attachment device, that allows both lances to be joined.

Being able to dispose of the lances coupled between them allows the total consumption of each lance once in usage, this way no residues of the lances are produced and therefore there are no material losses, making the operation cheaper. The shape of the ends of the lances and of the coupling pieces allows to couple as many lances necessary, with the objective of avoiding loss of lances.

In another embodiment, the thermal lances of the present invention have a coating with a material having a high melting point (above 2,000 °C), such as ceramic material, which is applied to the lances that work in places with temperatures above 1,400 °C therefore avoiding that the lances are melted and thereby losing their shape, capacity to conduct oxidizing gases and their capacity to combust. The coating of the lances can be applied to the exterior profile and/or at least one of the interior profiles.

The thermal lance of the present invention is obtained by means of the application of thermal, mechanical and/or chemical processes. Each tubular profile before being fixed concentrically undergoes a metal shaping process, preferably the exterior profile is the first to be shaped and the interior central profile is the last to be shaped. The number of profiles that undergo the shaping process will depend on the design of each lance, namely on the number of profiles that are required to achieve a determined lance design.

Once the shaping process is finished for each profile that will form the lance, the shaped profiles are coupled, by means of thermal, mechanical and/or chemical that, apart from mounting, achieve an interference of measures between profiles, in such a way that a set profile is left fixed (coupled) to the preceding profile, which allows to leave them fixed and coupled to resist the pressure and the oxidizing gas or oxygen flow that passes through the lance during operation, without any profile releasing from another.

The cross sections of the profiles used in the conformation of the lance, according to the present invention, allow for design to obtain required flex resistance based on user-discretion, allowing to achieve resistance when necessary increased from when other types of lances of equal mass. Additionally, the geometric configuration obtained from the lance in its totality allows to concentrate the attack focus with great precision, achieving a more even, cleaner, exact and efficient cut.

The lances of the present invention thanks to their greater leverage of the calorific power of the lance, allow to increase their speed and cut capacity, with which it is possible to reduce the exposure time of the operator to high temperatures, reducing the risk of thermal stress.

The lances of the present invention have varied uses, such as for example in the case of copper and slag cutting, in places such as: pot bottoms, bores or accumulated accretion, oven windows, oven floors with copper material and brick, accretions on oven walls, cleaning of nozzle storage zones, accretions in ducts of the pre chamber of gas exit, passage opening, refine and anode oven.

The thermal lances can also be used to carry out curs that allow to efficiently open oven passages in copper, steel, ferroalloys, platinum and/or other materials smelters, independent of the plug having any composition, even if it was pure graphite (carbon). Equally, can be used to cut and/or perforate by melting steels of any quality or thickness, such as for example 1,000mm, 2,000mm, 3,000mm and more. Equally, can be used to cut and/or perforate blocks of concrete or rocks and stones of any kind and dimension.

Moreover, as stated before, the thermal lances of the present invention can be used for cutting and/or perforating by melting any type of material, including diamond that is the most resistant to temperature, where preferably it is used to perforate and/or cut by melting materials having high thermal resistance and that accept a low iron contamination, such as for example silica and/or other non-ferrous materials.

### EXAMPLE OF APPLICATION

A thermal lance, as an example according to the invention, such as represented in figures 1 to 6, was produced in a way that comprises an exterior tubular body (1), an interior tubular profile (3) of iron or steel with cross section in the shape of a star with four points, an interior tubular profile (4) of aluminum with a round cross section, and another interior tubular profile (8) of iron with cross section in the form of a star with four points, disposed in a concentric way and one within the other, forming that way a series of cavities or oxygen passages.

In table N° 1 it is shown how 1 cc of iron generates nearly six times more energy than what 1 cc of aluminium is required to reach ignition point.

| Volumetric ratio of generation (Fe) and absorption (Al) of Energy | | |
|---|---|---|
| Energy necessary to reach the ignition point of AL | kJ/g | 2.17 |
| Energy that combustion of Fe generates | kJ/g | 4.23 |
| Volumetric mass of Fe | g/cc | 7.87 |
| Volumetric mass of Al | g/cc | 2.7 |
| Energy generated by 1 cc of Fe | kJ | 33.29 |
| Energy required by 1 cc of Al to reach ignition temperature | kJ | 5.87 |

The lance carried out with preference according to the invention, comprises an aluminium insert along with another iron insert, where the ratio between the cross areas of the cavities or passages, where the oxygen flows, and the cross area of the combustible material (iron / aluminium) is in a ratio of metal area/oxygen area of a range between approximately 1:2 to at least 1:8, and/or the ratio between the thickness of the aluminium parts and the iron or steel is in a range of between approximately 1:3 to at least 1:70.

The cavities or interior passages (5) that are formed between the hollow interior profiles have at least a straight part and at least a curve part, and where said cavities or interior passages have a configuration of 100% steel or iron walls adjacent to steel or iron and aluminium walls, and adjacent to 100% aluminium walls.

In table N° 2 it can be appreciated that a thermal lance that comprises the configuration according to the present example of application, wherein the aluminium is with iron, generates 2.6 times more unit energy (kJ/g) than a lance that comprises iron with iron.

| Evaluation of energy of 2 inserts (Fe and Al) of equivalent area | | | |
|---|---|---|---|
| Concept | Unit of Measurement | Al+Fe | Fe+Fe |
| Inserted perimeters | mm | 50.3 | 50.3 |
| Thickness of insert 1 always Fe | mm | 1.0 | 1.0 |
| Thickness of insert 2 (Al or Fe) | mm | 1.0 | 1.0 |
| Area insert 1 | mm² | 50.3 | 50.3 |
| Weight insert 1 (1m) | g | 392.1 | 392.1 |
| Area insert 2 (Al or Fe) | mm² | 50.3 | 50.3 |
| Weight insert 2 (Al or Fe) (1m) | g | 135.7 | 392.1 |
| Total weight of composition (1m) | kJ | 527.8 | 784.1 |
| Energy generated by insert 1 of Fe | kJ/g | 1,658.5 | 1,658.5 |
| Total energy to reach Fe ignition point | kJ | 0.38 | |
| Energy of insert 1 of Fe used to take insert 2 to ignition point | kJ | 294.5 | 149.8 |
| Energy used from insert 1 to take Fe to ignition point | kJ | 149.8 | 149.8 |
| Energy remaining available from insert 1 | kJ | 1,214.2 | 1,358.9 |
| Energy generated by insert 2 | kJ | 4,051.6 | 1,658.5 |
| Energy developed by composition | kJ | 5,265.8 | 3,017.4 |
| Energy available developed by the composition by unit of mass | kJ/g | 10.0 | 3.8 |
| Energy generation ratio (Al + Fe)/(Fe+Fe) | | 2.6 | |

## Claims

1. Thermal lance (1) consumable by exothermal reaction that is used to perforate and/or cut any type of material of different thickness and dimensions, having a main exterior tubular body (2) and at least an interior hollow profile (3) that has a different cross section disposed in concentric form forming between each of the interior hollow profiles and/or the main exterior tubular body cavities (5) that configure passages for oxidizing gas (6), wherein it comprises at least one aluminium, and/or magnesium, and/or other material, interior hollow profile (4), having a different cross section, where the ratio between the cross areas of the cavities or passages and the cross area of the fuel material (iron, aluminium, and/or magnesium, and/or other materials) is in a metal area/oxygen area ratio in a range of between approximately 1:2 to at least 1:8, and/or the ratio between the thickness of the aluminium and/or magnesium parts and the iron or steel is in a range of between approximately 1:3 to at least 1:70.

2. Thermal lance according to claim 1, wherein the cavities or passages comprise at least a straight part and at least a curve part.

3. Thermal lance according to the preceding claims, wherein the aluminium material is disposed adjacent to and/or with the iron material.

4. Thermal lance according to the preceding claims, wherein the cavities or interior passages have such a configuration that the disposition of the at least one interior hollow profile and the at least one aluminium, and/or magnesium, and/or other material interior hollow profile (4) generates wall cavities 100% of steel or iron adjacent to wall cavities of steel or iron and aluminium and/or magnesium, and/or other material, and adjacent to wall cavities 100% of aluminium and/or magnesium, and/or other material.

5. Thermal lance according to the preceding claims, wherein the thermal lances are attachable between each other.

6. Thermal lance according to the preceding claims, wherein the shape of the cross section of said interior profiles is selected between at least a square, oval, triangular, hexagonal shape, star shape of multiple points, and/or round, as well as any other polygonal shape.

7. Thermal lance according to the preceding claims, wherein the cavities or interior passages formed within the thermal lance (1) have varied geometric shapes.
